# EUROPEAN PATENT APPLICATION

(11) **EP 3 112 295 A1**
(43) Date of publication of application: **04.01.2017**
(21) Application number: 16175011.2
(22) Date of filing: 17.06.2016
(51) Int. Cl.: B65G 1/06

(54) **SYSTEM AND METHOD FOR STORING OBJECTS**

(30) Priority: 29.06.2015 NL 2015044
(71) Applicant: Stichting Sangria, 4561 HN Hulst (NL)
(72) Inventor: VAN RIJN, Nicolaas Johannes Petrus, 4561 HN Hulst (NL)
(74) Representative: Patentwerk B.V.

(57) **Abstract**

The invention relates to a system for storing objects (18) comprising:
- a number of storage conveyors (3A-3D) for supporting and moving objects (18) placed thereon,
- a shuttle track at one end of the storage conveyors (3A-3D), which extends transversely of the longitudinal direction of the storage conveyors,
- a shuttle (5A-5D, 6A-6D, 11-14) positioned on the shuttle track for moving objects (18) along the track, wherein the shuttle (5A-5D, 6A-6D, 11-14) has means for loading the storage conveyors (3A-3D) with objects (18) and/or unloading objects (18) therefrom, and
- a robot (15, 16) for lifting an object (18) from a storage conveyor (3A-3D), a shuttle track and/or a shuttle (5A-5D, 6A-6D, 11-14), moving the object (18) to another storage conveyor(3A-3D), shuttle track and/or shuttle (5A-5D, 6A-6D, 11-14).

## Description

The invention relates to a system for storing objects. The invention also relates to a robot for use in a system according to the invention. The invention further relates to a method for storing objects, in particular by making use of the system according to the invention.

A rack or system for storing objects is known from NL 1008004. In this known storage rack each level has a number of storage conveyors which connect on an end side to a shuttle track provided with driven shuttles which can travel on the shuttle track for the purpose of loading and unloading objects onto and from selected storage conveyors. The known system is particularly suitable for (temporary) storage of boxes and crates. There is an increasing need for allowing more flexible (re)positioning of objects on the storage conveyors.

An object of the invention is to provide an improved system for storing objects.

The invention provides for this purpose a system for storing objects, comprising: a number of storage conveyors placed adjacently of each other, and preferably a number of storage conveyors placed at levels one above another, for supporting and moving objects placed thereon, at least one shuttle track, and preferably a number of shuttle tracks placed one above another, at at least one end of the storage conveyors, which at least one shuttle track extends transversely of the longitudinal direction of the storage conveyors, wherein each shuttle track is configured to move objects in a direction transversely of the longitudinal direction of the storage conveyors, and wherein at least one shuttle is preferably positioned on each shuttle track for the purpose of moving objects in a direction transversely of the longitudinal direction of the storage conveyors, and wherein each shuttle is also configured to move objects in the longitudinal direction of the storage conveyors for the purpose of loading the storage conveyors with objects and/or unloading objects therefrom, and at least one robot for lifting at least a part of at least one object from a storage conveyor and/or a shuttle track and/or a shuttle (when applied), moving the at least one lifted object to preferably another storage conveyor and/or shuttle track and/or shuttle (when applied) and setting the at least one object down on the preferably other storage conveyor and/or shuttle track and/or shuttle (when applied). By applying the at least one robot both the absolute and relative positions of objects within the system according to the invention can be changed relatively easily and with a relatively high measure of flexibility. The robot will generally be configured here to move one or more objects from a storage conveyor to another, generally substantially parallel oriented storage conveyor. It is however also possible to envisage the robot being configured to move objects from a first location on the storage conveyor to a second location on the same storage conveyor and/or to move objects from a storage conveyor to a shuttle of a shuttle track, or vice versa. The robot is generally configured to pick up an object at a pick-up location and set it down at a set-down location, wherein the pick-up location and the set-down location are positioned a distance from each other. It is also possible to envisage the pick-up location and set-down location being formed by the same location, which can be advantageous in the rearrangement of objects on a storage conveyor, wherein an object to be rearranged is temporarily picked up to make space for another object to be loaded or unloaded. Following this loading or unloading the picked-up object can optionally be replaced again at the same (or another) location on the storage conveyor. Pick-up of one or more objects is also understood to include lifting and hoisting of these one or more objects. Usual objects which can be stored in the system and moved by means of the robot are boxes, crates, pallets, (rolling) containers, other types of product and assemblies thereof. Each pallet, crate, container etc. is or has generally been loaded here with a plurality of mutually stacked objects. It is possible to envisage an object as such being assembled from a plurality of (separate) components, wherein each component can be individually lifted and moved by the robot. The boxes, crates and (rolling) containers will generally be supported in the lift by a pallet and/or other type of stabilizing structure in order to guarantee safe and stable transport.

The robot is generally of an electromechanical nature. The robot is preferably programmed and/or controlled by means of a control unit, wherein a predefined pick-up location and a predefined set-down location are inputted.

The system according to the invention, also referred to as (storage) rack or storage area, is configured to store objects temporarily on desired storage conveyors (longitudinal conveyors) by guiding these objects via a shuttle track (transverse conveyor), preferably using a shuttle arranged on the shuttle track, to an outer end (end side) of a storage conveyor and there moving them to the respective storage conveyor. The shuttle track is in fact a transverse conveyor which is preferably oriented at right angles (perpendicularly) relative to one or more, and preferably all, storage conveyors (also referred to as longitudinal conveyors). The shuttle track generally connects here to the end sides of at least a number of storage conveyors. The shuttle track can be provided with the at least one shuttle, also referred to as a displaceable (mobile) carrier platform, which is movable relative to the shuttle track. However, the shuttle track need not necessarily be provided with one or more shuttles. The shuttle track (transverse conveyor) can for instance be formed by (guide) rails, a roller conveyor, a conveyor belt or other type of conveyor, wherein at least a part of the shuttle track can optionally be motor-driven for the purpose of moving objects over the shuttle track. The applied robot can lift objects, or one or more parts thereof, from the shuttle track, preferably from the shuttle (when applied), and move the lifted object and set down the object on a (specific) storage conveyor. Unloading of goods stored on the storage conveyors can take place in reverse manner. Examples hereof are included in the Netherlands patent NL 1008004, the content of which is deemed to form part of this patent specification by way of reference.

Although it is possible to envisage the system according to the invention comprising a single level with storage conveyors connecting at at least one end to one or more shuttle tracks, also referred to as a single-layer system, the system will generally comprise a plurality of levels lying one above another, wherein each level is formed at least partially by storage conveyors which connect at at least one end to one or more shuttle tracks.

The robot is preferably configured to move at least one object within the same level from a storage conveyor and/or a shuttle to another storage conveyor and/or other shuttle. This movement is also referred to as a horizontal movement or a movement in the XY plane. The robot can rearrange objects on the same storage conveyor, move objects between a storage conveyor and a shuttle and/or move objects between different storage conveyors. When the robot is configured to move objects between different storage conveyors, it is possible to envisage the robot being configured to move objects from a storage conveyor to a storage conveyor oriented substantially parallel thereto and/or from a storage conveyor to a storage conveyor lying in line therewith. In a multi-layer system each level can comprise one or more robots. It is also possible here to envisage the robots being able to co-act with each other and transfer objects between each other.

In a preferred embodiment the robot is configured to move at least one object from a storage conveyor and/or a shuttle of a level to another storage conveyor and/or another shuttle of another level. The net movement of an object can be formed here by a vertical movement (movement in the XZ plane or YZ plane), or by a spatial movement (movement in the XYZ plane). This spatial movement is also referred to as diagonal movement.

The robot is preferably configured to pick up objects in at least one predefined preferred position from at least one storage conveyor and/or at least one shuttle and to set down objects in at least one predefined preferred position on at least one other storage conveyor and/or at least one other shuttle. This predefined, and generally programmed, preferred position generally increases the accuracy with which the robot can pick up and set down one or more objects. Because the dimensioning of the objects is known, and the movement of the driven storage conveyors is also known, the exact position of each object in the system is known, which facilitates pick-up and set-down of objects by the robot and guarantees as far as possible the safety of the system, in particular a controlled operation of the robot. The robot will usually be configured to pick up and set down objects at the same level in at least two, but preferably at least four, predefined preferred positions.

The robot is preferably at least partially, and more preferably substantially wholly enclosed laterally by an assembly of storage conveyors and optionally at least one shuttle track. In a multi-layer system at least one robot is preferably (also) covered over by an above-lying level, so that a plurality of robots can optionally be positioned one above another. At least one robot is preferably positioned above at least one storage conveyor. Positioning at least one robot above one or more storage conveyors generally facilitates the pick-and-place movement of the robot during movement of an object, or at least a (component) part thereof. It is favourable for at least one storage conveyor to protrude relative to an above-lying storage conveyor, and wherein each storage conveyor preferably protrudes relative to each storage conveyor lying immediately above. The assembly of storage conveyors lying one above another in this way acquires a pyramid-like construction, wherein the robot can place objects (or components thereof) relatively easily on protruding parts of a storage conveyor (as desired). Such a construction therefore increases the accessibility of each storage conveyor by the at least one robot.

The robot can have different embodiments. It is possible here, when the system comprises a plurality of robots, to envisage embodying different robots in different ways. At least one robot preferably comprises at least one robot arm configured to lift, move and set down at least a part of at least one object. A robot arm is generally relatively compact and manoeuvrable, this providing advantages from structural, logistical and economic viewpoint. The robot arm will generally be axially rotatable here. The robot arm preferably comprises at least one upright mast and at least one laterally protruding jib connected to the mast. The mast is generally connected axially to a robot foot. The mast is optionally connected pivotally here to the robot foot. The jib is preferably connected pivotally to the mast and optionally connected for axial rotation to the mast. Such measures considerably increase the freedom of movement of the robot arm, and thereby the range. It is possible to envisage the mast and/or the jib themselves having a segmented (articulated) construction in order to further increase the freedom of movement of the robot arm. A part of the jib remote from the mast preferably comprises at least one engaging element for engaging an object to be moved. The engaging element can be of very diverse nature and can for instance, though not exclusively, be formed by a gripping element for gripping at least one object, by at least one lifting tine for lifting at least one object, and/or by at least one lifting belt for lifting at least one object. The engaging element can be connected movably to the jib. It is possible to envisage at least one robot comprising a plurality of robot arms which can optionally operate independently of each other, which can considerably enhance the speed of reorganization (rearrangement) of the objects in the system.

In another preferred embodiment the robot comprises a plurality of substantially parallel stationary guide rails, at least one mobile guide rail connected movably to the stationary guide rails, which mobile guide rail extends substantially transversely relative to the longitudinal direction of the stationary guide rails, and at least one engaging element connected movably to the mobile guide rail and configured to engage on an object to be moved. The stationary guide rails are preferably oriented substantially horizontally here. Such a construction for moving an engaging element, examples of which have already been described in the foregoing, is also referred to as an XY traverse or a displacing device in the substantially horizontal plane. In order to enable the at least one engaging element to pick up and set down an object efficiently, it is advantageous that the stationary guide rails and/or the at least one mobile guide rail partially span at least one storage conveyor and optionally at least one shuttle track.

Each shuttle track preferably comprises rails, wherein each shuttle is provided with wheels to enable travel of the shuttle over the rails. The shuttle more preferably comprises a drive mechanism for driving at least one wheel to enable travel of the shuttle over the rails for the purpose of enabling movement of objects transversely of the longitudinal direction of the storage conveyors and in substantially horizontal direction. Each shuttle preferably further comprises a driven conveyor for moving objects in the longitudinal direction of the storage conveyors. This latter conveyor of the shuttle can also comprise one or more chain conveyors (chain tracks) oriented substantially parallel to each other.

The storage conveyors are preferably (also) motor-driven, and therefore configured to move objects positioned thereon in a longitudinal direction of the storage conveyors. Each storage conveyor can for instance be formed by a conveyor belt or by a roller conveyor. It is also possible to envisage the storage structure connecting to the shuttle(s) also comprising one or more chain conveyors (chain tracks) oriented substantially parallel to each other. The number of chain conveyors of a shuttle and the number of chain conveyors of a storage conveyor preferably correspond in order to guarantee the smoothest possible displacement of objects between a shuttle and a storage conveyor.

It is possible to envisage a plurality of shuttle tracks being applied at a level in the system, wherein a number of conveyors are enclosed at opposite ends by two shuttle tracks. The shuttle tracks can otherwise also be mutually connected via a bypass conveyor, whereby objects to be transported need not necessarily be transported via a storage conveyor to an opposite shuttle track, since this can optionally take place via the bypass conveyor. This can be advantageous for instance when storage of objects on the storage conveyor is not necessary or not desirable and/or when a rapid feed of determined objects through the system is desired.

The invention also relates to a robot for use in a system according to the invention. Advantages and embodiment variants of the robot have already been described at length in the foregoing.

The invention further relates to a method for storing objects by making use of a system according to the invention, comprising the steps of: A) placing an object on a shuttle track, preferably on a shuttle arranged on the shuttle track, B) moving the object, preferably the shuttle provided with the object, to an end of a desired storage conveyor, C) moving the object from the shuttle track, preferably from the shuttle arranged on the shuttle track, to the storage conveyor, D) moving the object by means of the storage conveyor to a predefined pick-up location, and E) picking up the object by means of a robot from the pick-up location, moving the object and setting the object down at a predefined set-down location on a storage conveyor, a shuttle track and/or a shuttle (when applied). Advantages of the method according to the invention have already been described at length in the foregoing.

Diverse embodiment variants of the invention are described in the non-limitative clauses below:
1. System for storing objects, comprising:
   - a number of storage conveyors placed adjacently of each other, and preferably a number of storage conveyors placed at levels one above another, for supporting and moving objects placed thereon,
   - at least one shuttle track, and preferably a number of shuttle tracks placed one above another, at at least one end of the storage conveyors, which at least one shuttle track extends transversely of the longitudinal direction of the storage conveyors, wherein at least one shuttle is positioned on each shuttle track for moving objects in a direction transversely of the longitudinal direction of the storage conveyors, and wherein each shuttle is also configured to move objects in the longitudinal direction of the storage conveyors for the purpose of loading the storage conveyors with objects and/or unloading objects therefrom, and
   - at least one robot for moving at least one object from a storage conveyor and/or a shuttle to preferably another storage conveyor and/or shuttle.
2. System according to clause 1, wherein the robot is configured to move at least one object within the same level from a storage conveyor and/or a shuttle to another storage conveyor and/or other shuttle.
3. System according to clause 1 or 2, wherein the robot is configured to move at least one object from a storage conveyor and/or a shuttle of a level to another storage conveyor and/or other shuttle of another level.
4. System according to any of the foregoing clauses, wherein the robot is configured to pick up objects in at least one predefined preferred position from at least one storage conveyor and/or at least one shuttle and to set down objects in at least one predefined preferred position on at least one other storage conveyor and/or at least one other shuttle.
5. System according to any of the foregoing clauses, wherein the robot is configured to pick up and set down objects at the same level in at least four predefined preferred positions.
6. System according to any of the foregoing clauses, wherein the robot is at least partially enclosed laterally by an assembly of storage conveyors and optionally at least one shuttle track.
7. System according to clause 6, wherein the robot is substantially wholly enclosed laterally by an assembly of storage conveyors and optionally at least one shuttle track.
8. System according to any of the foregoing clauses, wherein the robot comprises at least one robot arm.
9. System according to clause 8, wherein the robot arm is axially rotatable.
10. System according to clause 8 or 9, wherein the robot arm comprises at least one upright mast and at least one laterally protruding jib connected to the mast.
11. System according to clause 10, wherein the jib is connected pivotally to the mast.
12. System according to clause 10 or 11, wherein a part of the jib remote from the mast comprises at least one engaging element for engaging an object to be moved.
13. System according to any of the foregoing clauses, wherein the robot comprises a plurality of robot arms.
14. System according to clause 13, wherein robot arms are configured to operate independently of each other.
15. System according to any of the foregoing clauses, wherein the robot comprises at least one lifting tine for lifting at least one object.
16. System according to any of the foregoing clauses, wherein the robot comprises at least one lifting belt for lifting at least one object.
17. System according to any of the foregoing clauses, wherein the robot comprises at least one gripper element for gripping at least one object.
18. System according to any of the foregoing clauses, wherein the robot comprises:
   - a plurality of substantially parallel stationary guide rails,
   - at least one mobile guide rail connected movably to the stationary guide rails, which mobile guide rail extends substantially transversely relative to the longitudinal direction of the stationary guide rails, and
   - at least one engaging element connected movably to the mobile guide rail and configured to engage on an object to be moved.
19. System according to clause 18, wherein the stationary guide rails are oriented substantially horizontally.
20. System according to any of the foregoing clauses, wherein each shuttle track comprises rails, and wherein each shuttle is provided with wheels to enable travel of the shuttle over the rails.
21. System according to clause 20, wherein the shuttle comprises a drive mechanism for driving at least one wheel to enable travel of the shuttle over the rails.
22. System according to any of the foregoing clauses, wherein each shuttle comprises a driven conveyor for moving objects in the longitudinal direction of the storage conveyors.
23. System according to any of the foregoing clauses, wherein each storage conveyor is motor-driven.
24. System according to any of the foregoing clauses, wherein a number of conveyors connect at opposite ends to a shuttle track.
25. System according to any of the foregoing clauses, wherein the system comprises at least one control unit for controlling the at least one robot, and preferably also for controlling the driven shuttle tracks and the driven storage conveyors.
26. Robot for use in a system according to any of the clauses 1-25.
27. Method for storing objects by making use of a system according to any of the clauses 1-25, comprising the steps of:
   A) placing an object on a shuttle,
   B) moving the shuttle to an end of a desired storage conveyor,
   C) moving the object from the shuttle to the storage conveyor,
   D) moving the object by means of the storage conveyor to a predefined pick-up location, and
   E) picking up the object by means of a robot from the pick-up location, moving the object and setting down the object at a predefined set-down location on a storage conveyor and/or shuttle.

The invention will be elucidated on the basis of non-limitative exemplary embodiments as shown in the following figures. Herein:
- figure 1 is a schematic top view of a first embodiment of a system for storing objects;
- figure 2 is a schematic top view of a system for storing objects according to another embodiment of the invention;
- figure 3 is a schematic side view of the system for storing objects according to figure 2;
- figure 4 is a schematic top view of a system for storing objects according to another embodiment of the invention;
- figure 5 is a schematic side view of the system for storing objects according to figure 4;
- figure 6 is a schematic top view of a system for storing objects according to another embodiment of the invention;
- figure 7 is a schematic side view of the system for storing objects according to a further embodiment of the invention;
- figure 8 is a perspective view of another system according to the invention;
- figure 9 is a side view of the system as shown in figure 8; and
- figure 10 is a top view of the system according to figures 8 and 9.

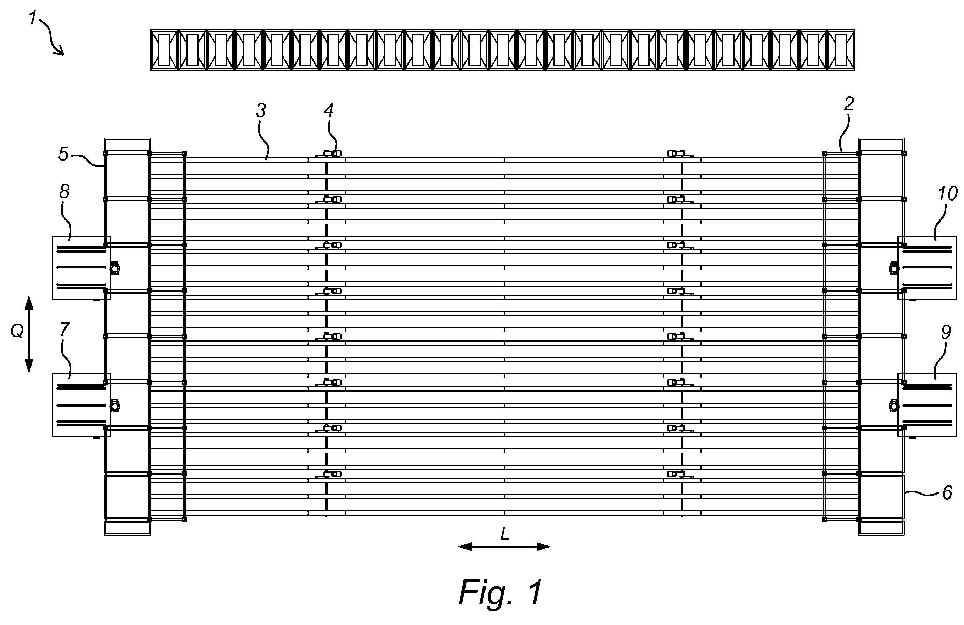

Figure 1 is a schematic top view of a usual system 1 for storing objects. The system comprises a number of racks 2, which racks support a number of storage conveyors 3 arranged in rows adjacently and above one another. Each of the storage conveyors can be driven by means of drive 4. At the end sides of racks 2 two racks are configured with shuttle tracks 5 and 6 placed one above another. Shuttles can carry products back and forth over shuttle tracks 5 and 6 in a direction Q transversely of the longitudinal direction L of storage conveyors 3 to a respective storage conveyor 3 or remove products from a respective storage conveyor 3. The shuttles are provided on their carrier surface with a conveyor which can place objects from the shuttle onto a storage conveyor 3 or from a storage conveyor 3 onto the shuttle in the longitudinal direction L. The feed and discharge of objects to and from shuttle tracks 5 and 6 can be performed by means of the respective vertical (hoist) lifts 7, 8 and 9, 10.

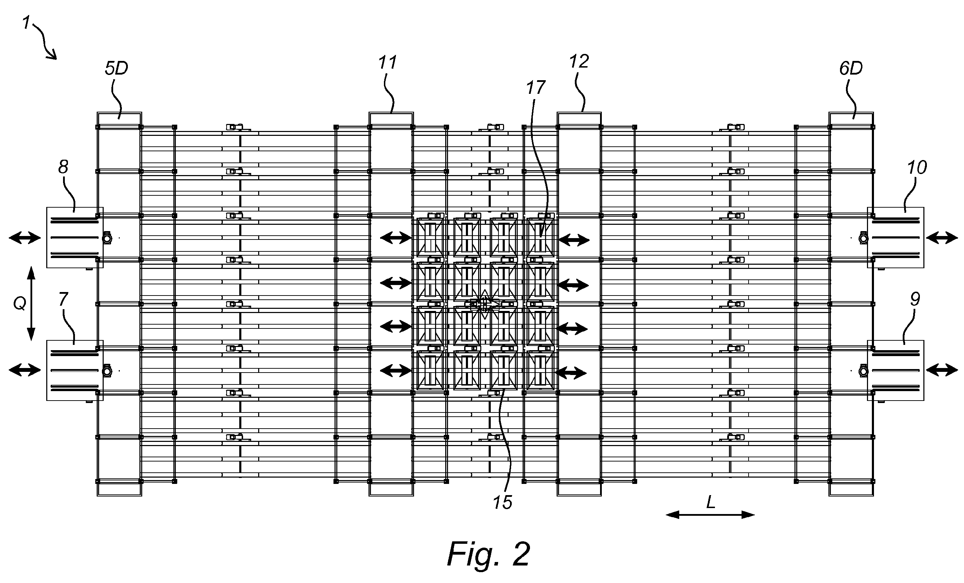

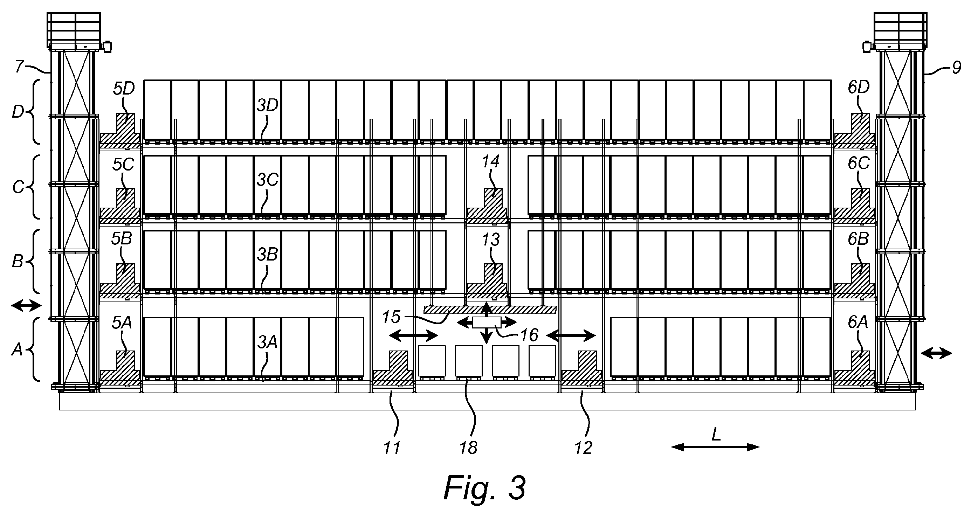

Figures 2 and 3 show a system 1 for storing objects, for instance for storing pallets with cargo and/or for storing carriers with rolling containers. System 1 comprises a number of storage conveyors 3A-3D which are placed adjacently and above one another and can carry objects. Storage conveyors 3A-3D are connected at the end sides of system 1 to a number of shuttle tracks 5A-D and 6A-D placed one above another.

In the system according to the embodiment of figures 2 and 3 storage conveyors 3A are interrupted by two shuttle tracks 11 and 12. Similarly to shuttle tracks 5A-D and 6A-D, shuttle tracks 11 and 12 can move objects back and forth in a direction Q transversely of the longitudinal direction L of the system. Storage conveyor 3B is also interrupted by shuttle track 13 and storage conveyor 3C by shuttle track 14.

The lowest level A is further provided between the two shuttle tracks 11 and 12 with an X-Y portal 15 having thereon a gripper arm 16 for picking up objects. Gripper arm 16 can here lift a whole object, i.e. a pallet with cargo or a carrier with a rolling container, or lift only a part of an object, for instance a box or crate, from a cargo or from a rolling container.

In figure 2 the X-Y portal 15 covers an area of four object positions 17 wide as seen in transverse direction Q, and four object positions long as seen in longitudinal direction L. Situated adjacently of each other here are four switching conveyors 18 on which objects can be placed and from which objects can be removed by shuttle track 11, shuttle track 12 and/or gripper arm 16. The first and second level of system 1 are provided with additional shuttle tracks 13 and 14 which can move objects from the one storage conveyor to the other.

Because of the different shuttle tracks 5A-D, 6A-D, 11, 12, 13 and 14 and the X-Y portal 15 with gripper arm 16 orders can be collected as required and preferably automatically from the system. One or more return conveyors can optionally be arranged here at each level, for instance to carry objects to one of the lifts 7, 8, 9 or 10. Products can thus be transported from higher levels to the lowest level with X-Y portal 15 so that they can be processed into an order.

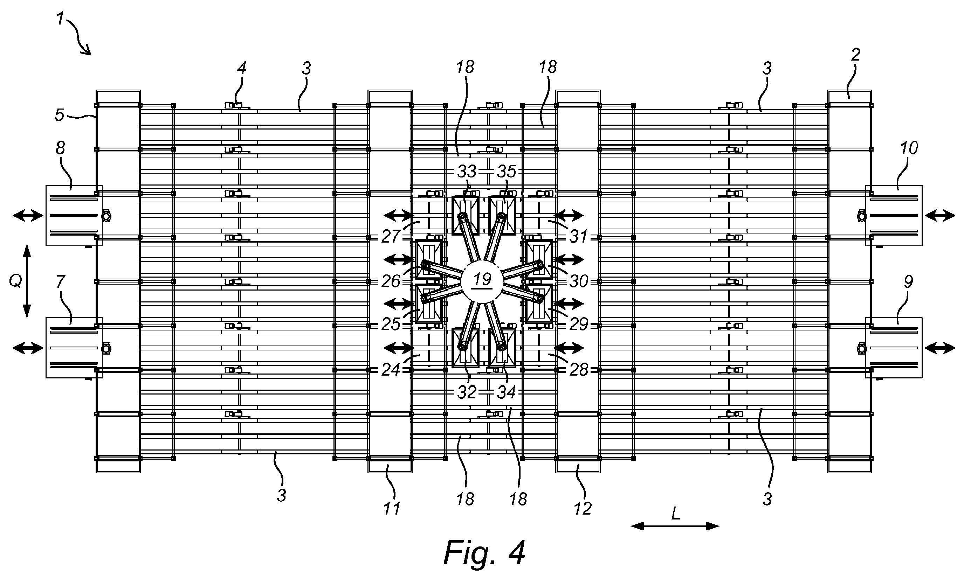

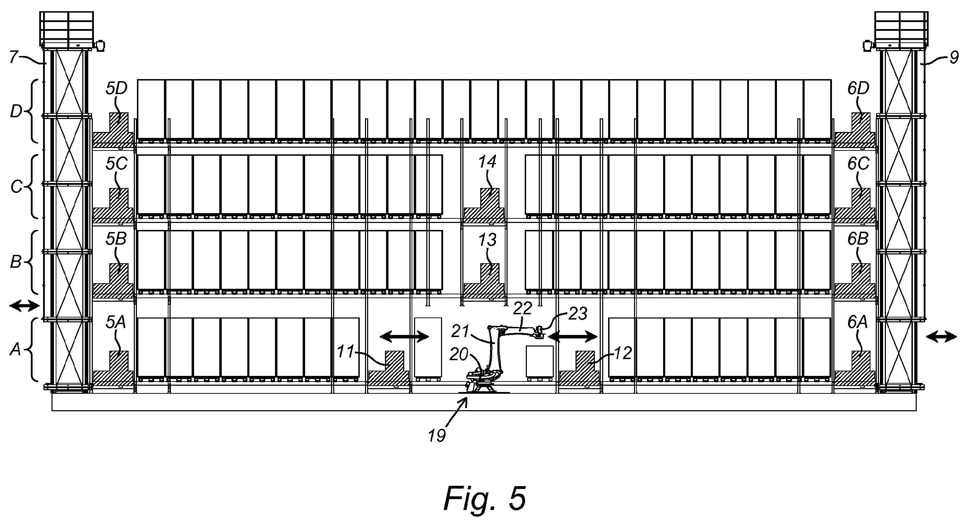

Figures 4 and 5 show an alternative embodiment in which a robot arm 19 is placed in the heart of system 1. The robot comprises of a revolving platform 20 on which a mast 21 is pivotally arranged. Arranged pivotally on mast 21 is a jib 22 on which a gripper arm 23 is mounted. The robot can remove objects from switching conveyors 25, 26, 29, 30, 32-35 and place them on switching conveyors 25, 26, 29, 30, 32-35. The feed and discharge of objects on switching conveyors 24-27 can be realized by shuttle track 11. The feed and discharge of objects on switching conveyors 28-31 can similarly be realized by shuttle track 12. The feed and discharge on switching conveyors 32-35 can be realized by the respective switching conveyors 24, 27, 28 and 31. Robot 15 can lift objects from switching conveyors 25, 26, 29, 30 and 32-35 and subsequently place them on one of the switching conveyors 25, 26, 29, 30 and 32-35. An object can here comprise for instance a pallet with cargo or a carrier with rolling container. Robot arm 19 can likewise lift up a part of the cargo on a pallet or rolling container and place it elsewhere. Robot arm 19 can hereby collect orders and bring the objects included in the order together at a desired position. Each of the switching conveyors 24-35 can comprise a drive of its own.

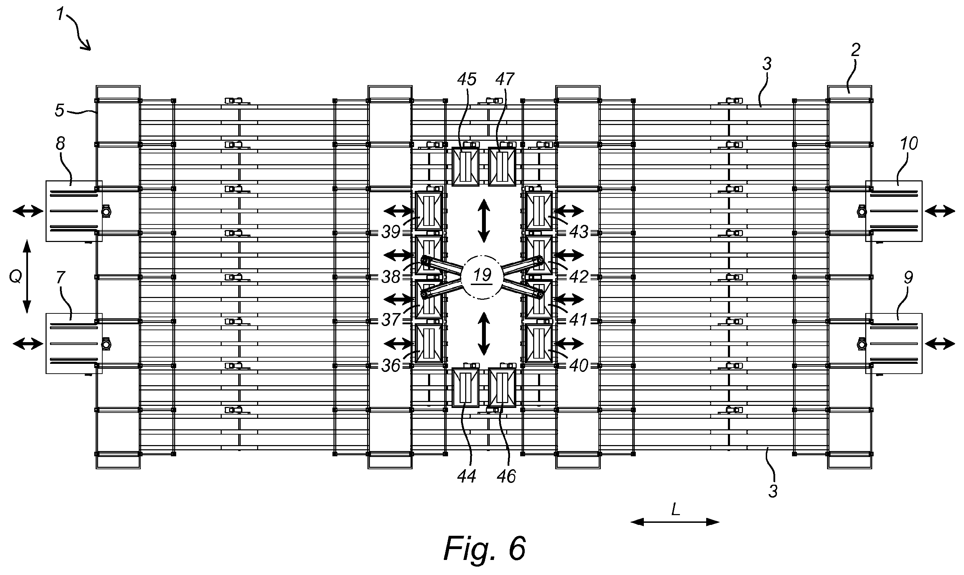

Figure 6 shows a system for storing goods, wherein robot arm 19 is configured for movement back and forth in the direction Q transversely of the longitudinal direction L of the system. Because robot arm 19 is movable, the number of switching conveyors which robot arm 19 can reach in order to place thereon or remove objects therefrom can be increased. In figure 6 the number of switching conveyors 36-47 which can be reached by robot arm 19 is twelve.

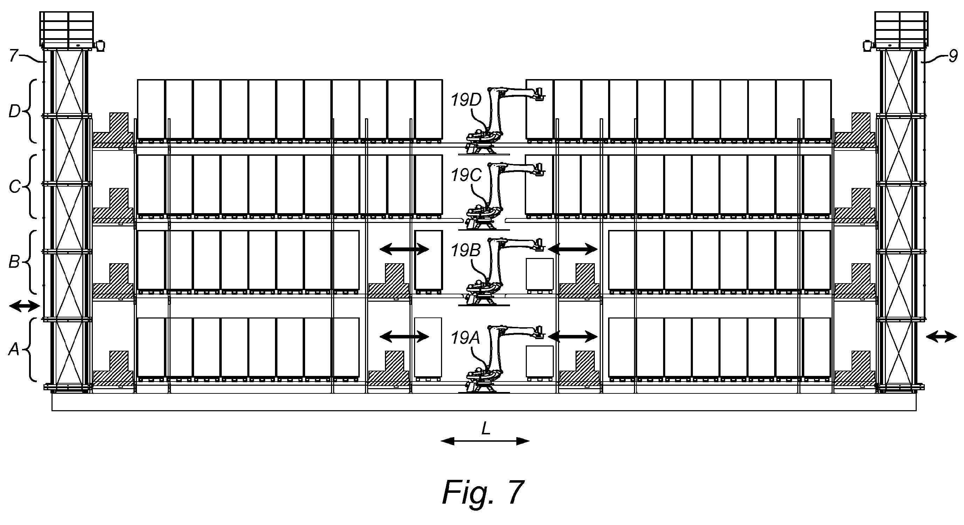

Figure 7 shows an embodiment in which a separate robot arm 19A-19D is placed at each respective level A-D. These robot arms have the same functionalities as the robot arm already described above. Alternatively, only a single robot arm placed on a lift can be used. This robot arm would then be able at a random one of these levels A, B or C to remove an object from one of the switching conveyors and subsequently deliver this object again at the same or another level. This imparts a high measure of flexibility in the collecting and sorting of orders.

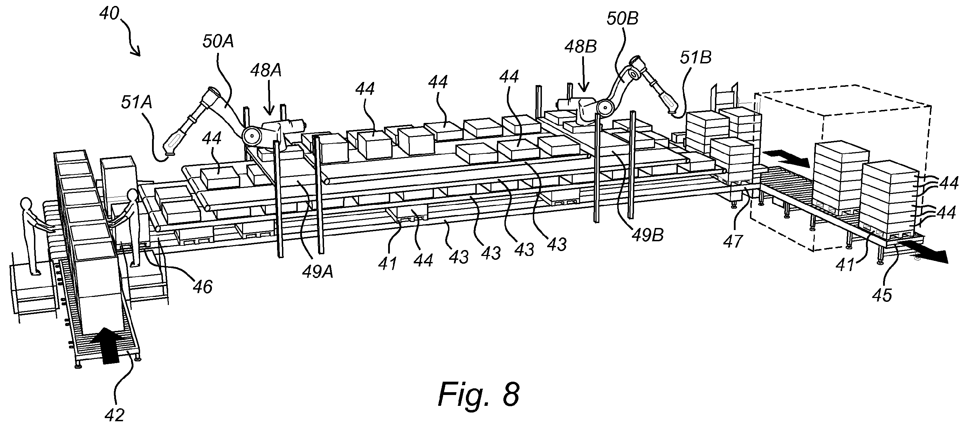

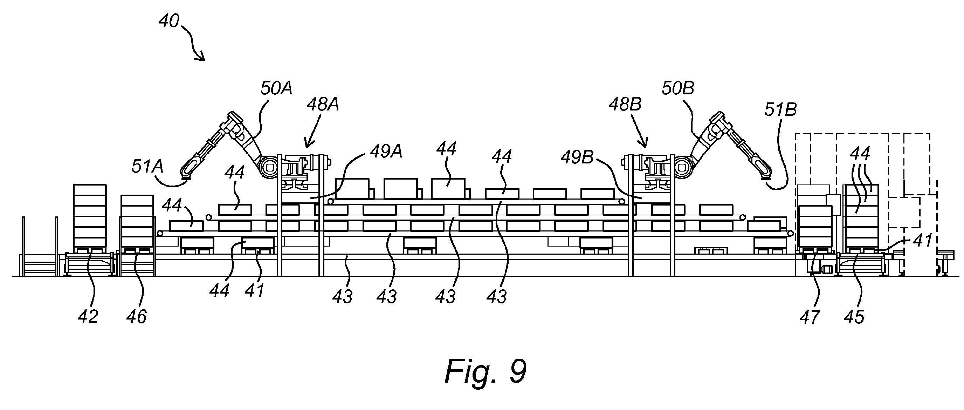

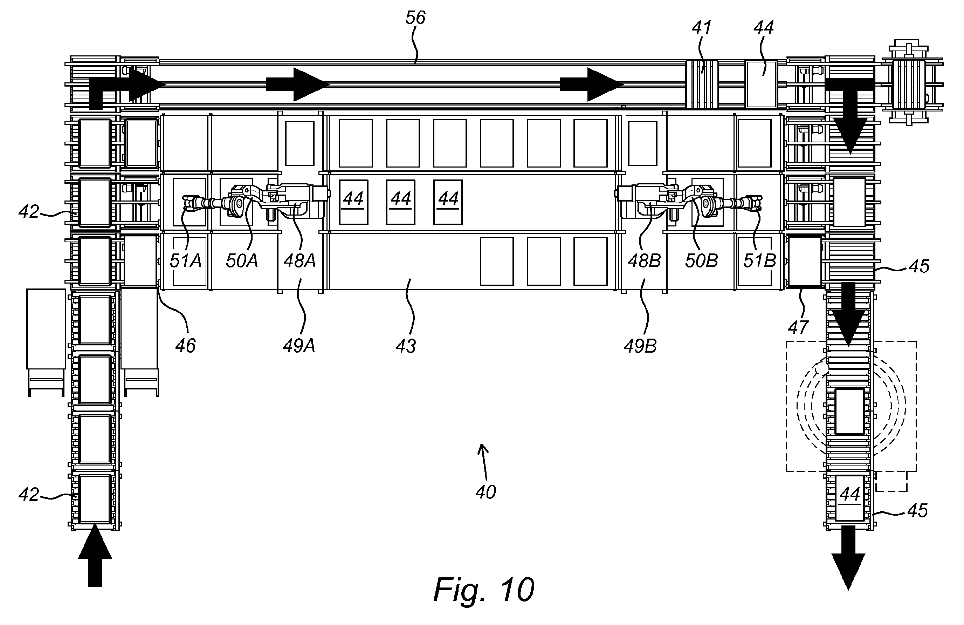

Figure 8 is a perspective view of another system 40 according to the invention. A side view of system 40 is shown in figure 9. System 40 is configured to feed objects 44 arranged on pallets 41 via a first shuttle track 42 (transverse conveyor) in the direction of an assembly of a number of storage conveyors 43 placed adjacently of each other and preferably a number of storage conveyors placed at levels one above another, for supporting and moving objects 44 placed thereon. In this exemplary embodiment objects 44 are placed on pallets 41, wherein each pallet 41 is provided with a plurality of objects stacked onto each other. The first shuttle track 42 configured to supply or feed objects 44 to or into system 40 is positioned on end sides of the lowest storage conveyors 43 (lowest level). The length of storage conveyors 43 of each above-lying level is smaller than the length of the lowest storage conveyors 43. In side view a pyramid-like assembly of storage conveyors is hereby obtained (see figures 8 and 9). Disposed on the end sides of the (lowest) storage conveyors 43 remote from first shuttle track 42 is a second shuttle track 45 for discharging objects 44 coming from storage conveyors 43. Also arranged between first shuttle track 42 and second shuttle track 45 is a bypass conveyor 56 (see figure 10) for direct displacement, without intervention of storage conveyors 43, of empty pallets 41 or optionally pallets 41 provided with objects 44, from first shuttle track 42 to second shuttle track 45. As shown in figures 8 and 9, it is possible to envisage also storing and moving objects 44 supported by pallets 41, via the lowest storage conveyors 43, from first shuttle track 42 to second shuttle track 45. In the shown exemplary embodiment the first shuttle track 42 and second shuttle track 45 are formed at least partially by a roller conveyor, which preferably takes a motor-driven form. No shuttles movable on rails or in other manner are therefore arranged on first shuttle track 42 and second shuttle track 45, although the application of shuttles could however be envisaged in a variant of the shown embodiment. Between each shuttle track 42, 45 and the end sides of the lowest storage conveyors 43 can optionally be arranged a pre-sorting platform 46, 47 for respectively enabling easier feed of objects onto storage conveyors 43 and easier discharge of objects from storage conveyors 43. For loading and unloading of storage conveyors 43 the system 40 comprises two robots 48a, 48b. Each robot 48a, 48b is positioned here on a stationary support platform 49a, 49b, the height of which in this example substantially corresponds to the height of the uppermost storage conveyors 43. Each robot 48a, 48b is connected rotatably to support platform 49a, 49b. Each robot 48a, 48b comprises an articulated arm 50a, 50b which is connected at a free outer end to a gripper 51 a, 51 b (gripping element and/or optionally a suction nozzle). Robots 48a, 48b are disposed at opposite end sides of storage conveyors 43. A first robot 48a is configured here to pick up (lift) an object 44 from first shuttle track 42 and/or first pre-sorting platform 46 by means of gripper 51 a and to set down object 44 on a desired storage conveyor 43 at a desired level. A second robot 48b is configured here to pick up (lift) an object 44 from a desired storage conveyor 43 (of a desired level) by means of gripper 51 b and to set down the lifted object 44 on second pre-sorting platform 47 and/or second shuttle track 45. By means of applying robots 48a, 48b the system 40 acquires an exceptionally high measure of flexibility in the ordered storage of objects 44 and subsequent removal thereof from system 40 in a desired stack. Separate, generally relatively expensive lifts for moving objects in vertical direction between levels need therefore not be applied.

It will be apparent that the invention is not limited to the exemplary embodiments shown and described here, but that numerous variants which will be obvious to the skilled person in this field are possible within the scope of the appended claims. It is possible here to envisage that different inventive concepts and/or technical measures of the above described embodiment variants can be wholly or partially combined without departing from the inventive concept described in the appended claims.

The verb "comprise" and conjugations thereof used in this patent specification are understood to mean not only "comprise", but also the terms "consist of", "substantially consist of", "formed by" and conjugations thereof.

### List of reference numerals

- 1.: System
- 2.: Rack
- 3.: Storage conveyor
- 4.: Drive
- 5A-D.: Shuttle track
- 6A-D.: Shuttle track
- 7.: Lift
- 8.: Lift
- 9.: Lift
- 10.: Lift
- 11.: Shuttle track
- 12.: Shuttle track
- 13.: Shuttle track
- 14.: Shuttle track
- 15.: X-Y portal
- 16.: Gripper arm
- 17.: Object position
- 18.: Switching conveyor
- 19.: Robot arm
- 20.: Revolving platform
- 21.: Mast
- 22.: Jib
- 23.: Gripper arm
- 24-35.: Switching conveyors
- 36-47.: Switching conveyors
- A-D.: Level
- Q.: Transverse direction
- L.: Longitudinal direction

## Claims

1. System for storing objects, comprising:
- a number of storage conveyors placed adjacently of each other, and preferably a number of storage conveyors placed at levels one above another, for supporting and moving objects placed thereon,
- at least one shuttle track, and preferably a number of shuttle tracks placed one above another, at at least one end of the storage conveyors, which at least one shuttle track extends transversely of the longitudinal direction of the storage conveyors, wherein at least one shuttle is preferably positioned on each shuttle track for moving objects in a direction transversely of the longitudinal direction of the storage conveyors, and wherein each shuttle is also configured to move objects in the longitudinal direction of the storage conveyors for the purpose of loading the storage conveyors with objects and/or unloading objects therefrom, and
- at least one robot for lifting at least a part of at least one object from a storage conveyor, a shuttle track and/or a shuttle, moving the at least one lifted object to preferably another storage conveyor, shuttle track and/or shuttle and setting the at least one object down on the preferably other storage conveyor, shuttle track and/or shuttle.

2. System as claimed in claim 1, wherein the robot is configured to move at least a part of at least one object within the same level from a storage conveyor and/or a shuttle to another storage conveyor and/or other shuttle.

3. System as claimed in claim 1 or 2, wherein the robot is configured to move at least a part of at least one object from a storage conveyor and/or a shuttle of a level to another storage conveyor and/or other shuttle of another level.

4. System as claimed in any of the foregoing claims, wherein the robot is positioned above at least one storage conveyor.

5. System as claimed in any of the foregoing claims, wherein the robot is at least partially enclosed laterally by an assembly of storage conveyors and optionally at least one shuttle track.

6. System as claimed in any of the foregoing claims, wherein at least one storage conveyor protrudes relative to an above-lying storage conveyor, and wherein each storage conveyor preferably protrudes relative to each storage conveyor lying immediately above.

7. System as claimed in any of the foregoing claims, wherein the robot comprises at least one preferably articulated robot arm configured to lift, move and set down at least a part of at least one object.

8. System as claimed in claim 7, wherein the robot arm is axially rotatable.

9. System as claimed in any of the foregoing claims, wherein the at least one robot is arranged on a stationary support platform, which support platform is positioned at substantially the same level as the level of the uppermost storage conveyor.

10. System as claimed in any of the foregoing claims, wherein the robot comprises a plurality of robot arms.

11. System as claimed in any of the foregoing claims, wherein the robot comprises at least one lifting tine, lifting belt and/or gripping element for lifting at least a part of at least one object.

12. System as claimed in any of the foregoing claims, wherein the robot comprises:
- a plurality of substantially parallel stationary guide rails,
- at least one mobile guide rail connected movably to the stationary guide rails, which mobile guide rail extends substantially transversely relative to the longitudinal direction of the stationary guide rails, and
- at least one engaging element connected movably to the mobile guide rail and configured to engage on an object to be moved.

13. System as claimed in any of the foregoing claims, wherein the system comprises at least one control unit for controlling the at least one robot, and preferably also for controlling the driven shuttle tracks and the driven storage conveyors.

14. Robot for use in a system as claimed in any of the claims 1-13.

15. Method for storing objects by making use of a system as claimed in any of the claims 1-13, comprising the steps of:
A) placing an object on a shuttle track, preferably on a shuttle arranged on the shuttle track,
B) moving the object, preferably the shuttle provided with the object, to an end of a desired storage conveyor,
C) moving the object from the shuttle track, preferably from the shuttle arranged on the shuttle track, to the storage conveyor,
D) moving the object by means of the storage conveyor to a predefined pick-up location, and
E) picking up the object by means of a robot from the pick-up location, moving the object and setting down the object at a predefined set-down location on a storage conveyor, a shuttle track and/or shuttle.
